# EUROPEAN PATENT APPLICATION

(11) **EP 0 902 052 A1**
(43) Date of publication of application: **17.03.1999**
(21) Application number: 98307452.7
(22) Date of filing: 15.09.1998
(51) Int. Cl.: C08L 67/02

(54) **Aliphatic polyester-acrylic blend molding composition**

(30) Priority: 15.09.1997 US 929587
(71) Applicant: GENERAL ELECTRIC COMPANY, Schenectady, NY 12345 (US)
(72) Inventor: Hoefflin, Frank A., Evansville, Indiana 47712 (US); Gallucci, Robert Russell, Mount Vernon, Indiana 47620 (US)
(74) Representative: Szary, Anne Catherine, Dr.

(57) **Abstract**

A UV-stable impact-modified, cycloaliphatic polyester resin molding composition having substantially enhanced and improved ductility and stiffness properties, to a substantially greater extent than predictable according to the rule of mixtures, comprising a blend thereof with from about 5% up to about 50% by weight, based upon the polymer mixture, of a high molecular weight, thermoplastic acrylic polymer or copolymer containing the structure: 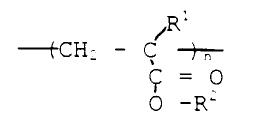 in which R¹ is H or C1-C6 alkyl, preferably methyl, and R² is C1-C12 alkyl, cycloalkyl or alkylaryl, preferably methyl, or a copolymer with up to 50% by weight of another ethylenically-unsaturated monomer.

## Description

The present invention relates to molding compositions based upon blends of thermoplastic polyester resin and thermoplastic polyacrylate resin binder materials which impart improved properties to the composition relative to gloss retention and color retention, which are indications of improved weatherability, improved impact strength, dimensional stability, increased flexural modulus, higher heat stability against sag, reduced shrinkage and improved melt flow properties.

Molding compositions based upon thermoplastic polyacrylate binder materials such as polymethyl methacrylate (PMMA) have good hardness, gloss and weatherability. However they have poor ductility, are brittle and have limited solvent resistance.

Molding compositions based upon thermoplastic cycloaliphatic polyester resin binder materials have good ductility, impact strength and weatherability properties at least in the case of cycloaliphatic polyesters which are substantially devoid of aromatic constituents.

While it is possible to formulate molding compositions from blends of different thermoplastic binder materials, in order to impart the desirable properties of each of the resins into the blend, generally this results in a degradation of some of the desirable properties and/or in the creation of undesirable properties not possessed by either of the resins per se.

### Description of Prior Art:

Reference is made to commonly-assigned US Patent 5,486,562, the disclosure of which is hereby incorporated herein, for its disclosure of UV-stable weatherable molding compositions based upon cycloaliphatic polyester binder materials containing impact-modifying elastomeric polymers and filler such as glass fibers, which compositions have enhanced melt flow properties while retaining good impact strength properties. The modulus of these compositions is low and while stiffness can be improved with added filler, like fiberglass, impact strength is reduced.

Reference is also made to commonly-assigned U.S. Patent 5,410,000 which discloses molding compositions containing poly(cycloalkyl/aryl) polyesters and mixtures thereof with other polymeric binder materials including polycarbonates, together with impact modifying polymers and reinforcing fillers.

Commonly-owned U.S. Patent 5,399,661 also discloses molding compositions containing poly(cycloalkyl/aryl) polyesters and mixtures thereof with other polymers, core shell impact modifiers and fillers. These aromatic cycloalkyl esters do not have good weatherability.

Reference is also made to U.S. Patent 5,498,668 which discloses thermoplastic molding compositions comprising blends of polyester resins which may be cycloaliphatic polyester resins, and acrylic polymers such as poly (methyl methacrylate) having similar refractive indexes, whereby the molding composition is visually-clear. This Patent makes broad reference to polymer blends of these specific cycloaliphatic polyesters containing from 1% to 99% by weight of either the polyester or of the acrylic polymer, and containing "impact modifiers" broadly, without identifying any such material or the content thereof. Also no reference is made to opaque, reinforced or weatherable compositions, or to ductility properties.

Reference is made to U.S. Patent 5,260,379 which discloses thermoplastic molding compositions comprising blends of aromatic polyester resins and styrene copolymers containing up to about 35 mol% methyl methacrylate and having good ductility and melt flow properties. Glass fiber reinforcing filler may be included as well as "impact modifiers". Specific blends containing 25, 50 and 75 weight percent of each of these styrene copolymers are disclosed but no specific impact modifier is disclosed as an additive to such blends.

Reference is made to U. S. Patent 3,657,389 which discloses hot melt adhesive compositions based upon polymer blends of cycloaliphatic polyesters and olefin polymers including acrylate and methyl methacrylate co-polymers. Fillers may be included but impact modifiers are not disclosed.

Reference is made to U.S. Patent 5,115,016 which discloses aromatic polyester resin molding compositions comprising a crystalline polyethylene terephthalate, reinforcing glass fiber and a thermoplastic poly(methyl methacrylate) modifier resin which improves the gloss and reduces warp of articles molded therefrom.

Finally, reference is made to European Patent Appn. 0248352 which discloses polymer compositions comprising mixtures of at least 55 wt% of a saturated polyester of a cycloaliphatic or aromatic diacid, up to 35 wt% of an acrylic rubber and up to 10 wt% of an elastomeric copolyester, and including other thermoplastic polymers such as polycarbonates, ABS polymers, and the like.

### SUMMARY OF THE INVENTION

The present invention relates to the discovery that the ductility and weatherability properties of the prior known UV-stable impact-modified, cycloaliphatic polyester resin molding compositions can be substantially enhanced and improved to a substantially greater extent than predictable according to the rule of mixtures by blending therewith from about 5% up to about 50% by weight, based upon the polymer mixture, of a high molecular weight, thermoplastic acrylic polymer or copolymer containing the structure: 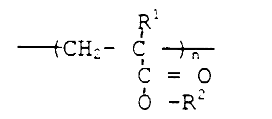 in which R¹ is H or C1-C6 alkyl, preferably methyl, and R¹ is C1-C12 alkyl, cycloalkyl or alkylaryl, preferably methyl, or a copolymer with up to 50% by weight of another ethylenically-unsaturated monomer.

### Detailed Description

The present invention is based upon the discovery that the ductility and toughness of UV-stable weatherable polyacrylate molding compositions can be substantially and unexpectedly improved by blending from about 95% to 50% by weight of the thermoplastic polyacrylate resin, i.e., acrylic homopolymer or copolymer with from about 5% to 50% by weight of a thermoplastic cycloaliphatic polyester resin to form a molding composition having a substantially greater ductility and toughness than could be predicted according to the rule of mixtures.

The present molding compositions preferably also contain from 2% to 30% by weight of an impact modifier such as an acrylic rubber, preferably a core shell modifier having a poly(methyl methacrylate) PMMA shell and a butyl acrylate core, or an acrylonitrile-styrene-acrylate (ASA) rubber, or an ethylene-propylene-diene graft styrene-acrylonitrile rubber (EPDM-g-SN), or most preferably, a glycidyl ester rubber as described hereinafter.

The present cycloaliphatic polyesters are condensation products of aliphatic diacids, or chemical equivalents, and aliphatic diols, or chemical equivalents. The present cycloaliphatic polyesters may be formed from mixtures of aliphatic diacids and aliphatic diols but must contain at least 80 mole % of cyclic diacid and/or diol components, the remainder, if any, being linear aliphatic diacids and/or diols. The cyclic components are necessary to impart good rigidity, and they do not absorb UV under normal exposure conditions, thereby providing rigid molded articles having excellent weatherability properties. Aromatic components are not preferred since, to the extent they are present, they impart enhanced UV-absorbance leading to degraded weatherability properties.

The preferred cycloaliphatic polyesters for use in the present molding compositions are condensation products of cycloaliphatic diols and cycloaliphatic diacids or chemical equivalents of the diacids such as the salts, esters or acid halides thereof, preferably the 1,4-cyclohexyl diacids and most preferably greater than 70 mole % thereof in the form of the trans isomer. The preferred cycloaliphatic diols are 1,4-cyclohexyl primary diols such as 1,4-cyclohexyl dimethanol, most preferably more than 70 mole % thereof in the form of the trans isomer.

The diols useful in the preparation of the polyester resins of the present invention are straight chain, branched, or preferably cycloaliphatic alkane diols and may contain from 2 to 12 carbon atoms. Examples of such diols include but are not limited to ethylene glycol; propylene glycol, i.e., 1,2- and 1,3-propylene glycol; 2,2-dimethyl-1,3-propane diol; 2-ethyl, 2-methyl, 1,3-propane diol; 1,3- and 1,5-pentane diol; dipropylene glycol; 2-methyl-1,5-pentane diol; 1,6-hexane diol; dimethanol decalin, dimethanol bicyclo octane; 1,4-cyclohexane dimethanol and particularly its cis-and trans-isomers; triethylene glycol; 1,10-decane diol; and mixtures of any of the foregoing. Preferably a cycloaliphatic diol or chemical equivalent thereof and particularly 1,4-cyclohexane dimethanol or its chemical equivalents are used as the diol component, preferably a mixture of cis- to trans-isomers thereof, where the trans isomer content is 70% or more.

Chemical" equivalents to the diols include esters, such as dialkylesters, diaryl esters salts and the like.

The diacids useful in the preparation of the aliphatic polyester resins of the present invention preferably are cycloaliphatic diacids. This is meant to include carboxylic acids having two carboxyl groups each of which is attached to a saturated carbon. Preferred diacids are cyclo or bicyclo aliphatic acids, for example, decahydro naphthalene dicarboxylic acids, norbornene dicarboxylic acids, bicyclo octane dicarboxylic acids, 1,4-cyclohexanedicarboxylic acid or chemical equivalents, and most preferred is trans-1,4-cyclohexanedicarboxylic acid or chemical equivalent.

Cyclohexanedicarboxylic acids and their chemical equivalents can be prepared, for example, by the hydrogenation of cycloaromatic diacids and corresponding derivatives such as isophthalic acid, terephthalic acid or naphthalenic acid in a suitable solvent, water or acetic acid at room temperature and at atmospheric pressure using suitable catalysts such as rhodium supported on a suitable carrier of carbon or alumina. See, Friefelder et al, *Journal of Organic Chemistry,* 31, 3438 (1966); U.S. Pat. Nos. 2,675,390 and 4,754,064. They may also be prepared by the use of an inert liquid medium in which a phthalic acid is at least partially soluble under reaction conditions and a catalyst of palladium or ruthenium in carbon or silica. See, U.S. Pat. Nos. 2,888,484 and 3,444,237.

Typically, in the hydrogenation, two isomers are obtained in which the carboxylic acid groups are in cis- or trans-positions. The cis- and trans-isomers can be separated by crystallization with or without a solvent, for example, n-heptane, or by distillation. The cis-isomer tends to blend better; however, the trans-isomer has higher melting and crystallization temperatures and is especially preferred. Mixtures of the cis- and trans-isomers are useful herein as well, and preferably when such a mixture is used, the trans-isomer will comprise at least about 70 parts by weight.

When the mixture of isomers or more than one diacid is used, a copolyester or a mixture of two polyesters may be used as the present cycloaliphatic polyester resin.

Chemical equivalents of these diacids include esters, alkyl esters, e.g., dialkyl esters, diaryl esters, anhydrides, salts, acid chlorides, acid bromides, and the like. The preferred chemical equivalents comprise the dialkyl esters of the cycloaliphatic diacids, and the most preferred chemical equivalent comprises the dimethyl ester of the acid, particularly dimethyl-trans-1,4-cyclohexane-dicarboxylate.

The polyester resins of the present invention are typically obtained through the condensation or ester interchange polymerization of the diol or diol equivalent component with the diacid or diacid chemical equivalent component and have recurring units of the formula 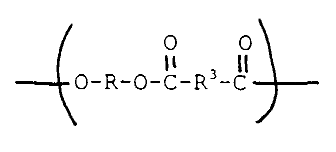 wherein R represents an alkyl or cycloalkyl radical containing 2 to 12 carbon atoms and which is the residue of a straight chain, branched, or cyloaliphatic alkane diol having 2 to 12 carbon atoms or chemical equivalents thereof; and R³ is an alkyl or a cycloaliphatic radical which is the decarboxylated residue derived from a cycloaliphatic diacid or chemical equivalent thereof with the proviso that at least one R or R³ group is a cycloalkyl group.

A preferred cycloaliphatic polyester is poly(1,4-cyclohexane - dimethanol-1,4-dicarboxylate) (PCCD) having recurring units of the formula 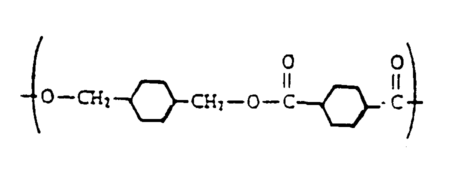 wherein R from above is derived from 1,4 cyclohexane dimethanol; and wherein R³ from above is a cyclohexane ring derived from cyclohexanedicarboxylate or a chemical equivalent thereof.

The reaction is generally run in the presence of a suitable catalyst such as a tetrakis (2-ethyl hexyl) titanate, in a suitable amount, typically about 100 to 400 ppm of titanium based upon the final product.

The preferred aliphatic polyesters used in the present reinforced molding compositions have a glass transition temperature (T_{g}) which is above 50°C, most preferably above about 100°C.

The thermoplastic alkyl acrylate polymers useful with the cycloaliphatic polyesters to form polymer blends having a synergistically-improved ductility are homopolymers or copolymers containing the structure 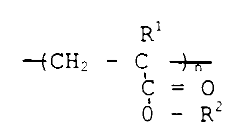 in which R¹ is H or C1-C6 alkyl, preferably methyl, and R² is C1-C12 alkyl, cycloalkyl or alkyl aryl, preferably methyl. In the case of acrylic ester homopolymers, n=100 to 100,000. In the case of copolymers, the molecular weight thereof will be within the molecular weight range of the homopolymer. In all cases the acrylic ester polymer preferably has a glass transition temperature above about 80°C.

The acrylic polymer or copolymer of the blend, most preferably a poly (methyl methacrylate) homopolymer, PMMA, serves to provide a composition which is less expensive than one based upon the polyester alone, has improved UV-stability and weatherability, and has significantly higher stiffness than one based upon the polyester alone, when used in the proper proportions or ratio, i.e., between about 5% to 50% by weight, preferably 20% to 40% by weight of the acrylic polymer or copolymer and about 95% to 50% by weight, preferably 80% to 60% by weight of the cycloaliphatic polyester.

While acrylic ester homopolymers, such as poly(methyl methacrylate) are preferred, the present acrylic ester polymer may be a copolymer or terpolymer of the acrylic ester monomer and up to about 50% by weight of one or two other ethylenically-unsaturated or vinyl co-monomers such as acrylonitrile, styrene, alkyl styrene, alpha olefins such as ethylene and propylene, vinyl esters such as vinyl acetate, unsaturated diacids or anhydrides such as maleic acid or anhydride, or maleimide.

A preferred PMMA homopolymer is PMMA V920A which is commercially available from Ato Haas under the trademark Plexiglass. In general the suitable acrylic polymer or copolymer will have a glass transition temperature of about 100°C and is immiscible with the polyester to provide a microphase-separated mixture having good toughness and non-transparency.

The substantially amorphous impact modifier copolymer resin preferably added to the polymer blend may comprise one of several different rubbery modifiers or combinations of two or more of these modifiers. Suitable are the groups of modifiers known as acrylic rubbers, ASA rubbers, acrylate or diene rubbers, organosiloxane rubbers, EPDM rubbers, SBS or SEBS rubbers, ABS rubbers and glycidyl ester impact modifiers.

The term acrylic rubber modifier can refer to multi-stage, core-shell, interpolymer modifiers having a cross-linked or partially crosslinked (meth)acrylate rubbery core phase, preferably butyl acrylate. Associated with this cross-linked acrylic ester core is an outer shell of an acrylic or styrenic resin, preferably methyl methacrylate or styrene, which interpenetrates the rubbery core phase. Incorporation of small amounts of other monomers such as acrylonitrile or (meth)acrylonitrile within the resin shell also provides suitable impact modifiers. The interpenetrating network is provided when the monomers forming the resin phase are polymerized and cross-linked in the presence of the previously polymerized and cross-linked (meth)acrylate rubbery phase.

Preferred rubbers are graft or core shell structures with a rubbery component with a Tg below 0°C, preferably between about -40° to -80°C, composed of poly alkylacrylates or polyolefins grafted with PMMA or SAN. Preferably the rubber content is at least 40 wt%, most preferably between about 70-90wt%.

Preferred glycidyl ester impact modifiers are polymers that comprise repeating units derived from one or more glycidyl ester monomers. As used herein, the terminology "glycidyl ester monomer" means a glycidyl ester of an ethylenically unsaturated carboxylic acid such as, e.g., acrylic acid, methacrylic acid, itaconic acid, and includes, e.g., glycidyl acrylate, glycidyl methacrylate, and glycidyl itaconate. In a preferred embodiment, the glycidal ester monomer is glycidyl acrylate or glycidyl methacrylate. A preferred content of the glycidyl ester modifier is between 1% to 10%.

In another preferred embodiment, the glycidyl ester impact modifier comprises first repeating units derived from one or more glycidyl ester monomers and second repeating units derived from one or more α-olefin monomers, e.g., ethylene, propylene, 1-butene, 1-pentene, styrene or alkyl acrylates or methacrylates.

The preferred impact-modified cycloaliphatic polyester/acrylic ester blend polymer compositions comprise:
(A) from 70 to 100 parts by weight of a thermoplastic polymer blend comprising about 50% to 95% by weight, most preferably 60-80%, of a cycloaliphatic polyester resin and about 5% to 50% by weight, most preferably 40-20%, of an acrylic ester polymer or copolymer. The polyester resin comprises the reaction product of:
   (a) at least one straight chain, branched, or cycloaliphatic C₂-C₁₂ alkane diol, most preferably a C₈-C₁₂ cycloaliphatic diol, or chemical equivalent thereof; and
   (b) at least one cycloaliphatic diacid, preferably a C₆-C₁₂ diacid, or chemical equivalent thereof;
   The acrylic polymer or copolymer comprises a polymer of an acrylic ester monomer, having the structure: 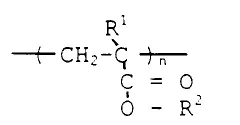 in which R¹ is H or C1-C6 alkyl, preferably methyl, and R² is C1-C12 alkyl, cycloalkyl or alkyl aryl, preferably methyl. In the case of acrylic ester homopolymers, n=100 to 100,000. The present acrylic ester polymer may be a copolymer of the acrylic ester monomer and up to about 50% by weight of an ethylenically-unsaturated or vinyl comonomer such as acrylonitile, styrene, alkyl styrene, alpha olefins such as ethylene and propylene, vinyl esters such as vinyl acetate, unsaturated diacids or anhydrides such as maleic acid or anhydride, or maleimide.
(B) from 2 to about 30 parts by weight of a rubbery impact modifier comprising a substantially amorphous resin comprising one of several different modifiers or combinations of two or more of these modifiers. Suitable are the groups of modifiers known as acrylic rubber, ASA modifiers, EPDM graft SAN or acrylic modifiers, and glycidyl ester modifiers.

While aliphatic polyester resins are preferred binder materials for molding compositions, since they have very high UV-stability properties, the present invention involves the discovery that blends of cyclo aliphatic polyester resins, which are expensive, in admixture with the less expensive, conventional UV-stable acrylic ester polymers or copolymers, not only reduce the overall cost of the composition while maintaining the UV-stability properties and increasing the weatherability, but they result in unexpected increases in the ductility and toughness of the composition beyond what could be expected according to the rule of mixtures.

In addition to the cycloalphatic polyester and acrylic polymer or copolymer blend, the present compositions can contain up to 30% by weight of additional polymeric binder materials in the blend, such as polycarbonate (PC) polymers, especially aromatic polyesters such as bisphenol A (BPA) PC, polyalkylene phthalates or naphthanoates, polybutylene terephthalate polymers (PBT), polyethylene terephthalate polymers (PET), polypropylene terephthalate polymers (PPT), polyethylene naphthanoate polymers (PEN), polycyclohexane dimethanol terephthalates and styrene-acrylonitrile copolymers, preferably containing 25% - 35% of acrylonitrile.

The preferred impact modifiers generally comprise a glycidyl ester polymer, or an acrylic or methacrylic grafted polymer of an acrylate elastomer, alone or co-polymerized with a vinyl aromatic compound. Especially suitable grafted polymers are the acrylic core-shell polymers of the type available from Rohm & Haas, for example Acryloid EXL3330. Most preferably, the impact modifier will comprise a two stage polymer having an n-butyl acrylate based rubbery core and a second stage polymerized from methylmethacrylate alone or in combination with styrene. Also present in the first stage are cross linking monomers and graft linking monomers.

Suitable glycidyl ester copolymers may, optionally, contain a minor amount, i.e., up to about 50 wt%, of repeating units derived from one or more other monoethylenically unsaturated monomers that are copolymerizable with the glycidyl ester monomer. As used herein the terminology "monoethylenically unsaturated" means having a single site of ethylenic unsaturation per molecule. Suitable copolymerizable monoethylenically unsaturated monomers include, e.g., vinyl aromatic monomers such as, e.g., styrene and vinyl toluene, vinyl esters such as e.g., vinyl acetate and vinyl propionate, and (C₁-C₂₀) alkyl(meth) acrylates such as, eg., butyl acrylate, methyl methacrylate, cyclohexyl methacrylate. As used herein, the term "(C₁-C₂₀)alkyl" means a straight or branched alkyl group of from 1 to 20 carbon atoms per group, such as e.g., methyl, ethyl, decyl, eicosyl, cyclohexyl and the term "(meth)acrylate" refers collectively to acrylate compounds and methacrylate compounds.

Suitable glycidyl ester copolymers can be made by, e.g., conventional free radical initiated copolymerization or graft polymerization methods.

In a highly preferred embodiment, the glycidyl ester impact modifier is a random copolymer having a relative composition according to structural formula (1): 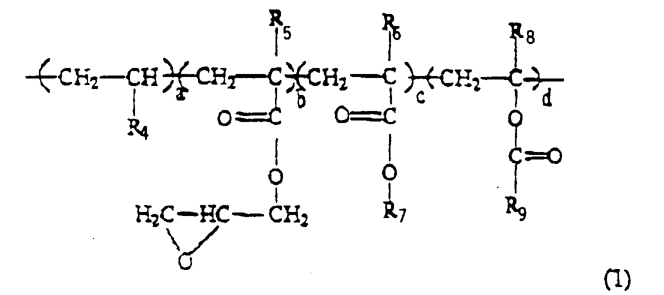 wherein:
R₄ is H, alkyl or aryl, preferably H;
R₅, R₆ and R₈ are each independently H or (C₁-C₆)alkyl, preferably H or methyl;
R₇ and R₉ are each independently alkyl or aryl, preferably methyl;
a + b + c + d = 100;
a is from 50 to 99.5;
b is from 0.5 to 25, preferably 1 to 10;
c is from 0 to 50; and
d is from 0 to 50, preferably 0.

In a preferred embodiment, the melt index, as measured at 190°C according to ASTM D-1238, of the glycidyl ester impact modifier is from 0.1 to 100 grams/10 minutes and preferably from 0.5 to 30 grams/10 minutes and preferably from 0.5 to 30 grams/10 minutes.

In a preferred embodiment, the glycidyl ester impact modifier comprises one or more copolymers selected from olefin-glycidyl (meth)acrylate copolymers, olefin-vinyl acetate-glycidyl (meth)acrylate copolymers and olefin-glycidyl(meth)acrylate-alkyl(meth)acrylate copolymers.

The method of blending the present compositions can be carried out by conventional techniques. One convenient method comprises melt blending the polyester, acrylic, impact modifier and other ingredients in powder or granular form, extruding the blend and comminuting into pellets or other suitable shapes. The ingredients are combined in any usual manner, e.g., by dry mixing followed by mixing in the melted state in an extruder.

The present weatherable molding compositions may be reinforced or stiffened by the inclusion of a mineral filler such as talc, clay, silica, wollastonite, barite or a fibrous glass or carbon filler, preferably glass fibers, in amounts ranging between about 5% and 50% by weight of the total composition, most preferably between 10% and 30%.

Additionally, additives such as mold releases, antioxidants lubricants, nucleating agents such as talc and the like, other stabilizers including but not limited to UV stabilizers, such as benzotriazole, supplemental reinforcing fillers, and the like, flame retardants, pigments or combinations thereof may be added to the compositions of the present invention.

### DESCRIPTION OF THE PREFERRED EMBODIMENTS

As set forth in the following examples, the properties are measured according to the following procedures:

Notched Izod (NI) and Unnotched Izod (UNI): This test procedure is based on the ASTM D256 method. In this case, using Izod Method E, the unnotched impact strength is obtained by testing an unnotched specimen. The results of the test is reported in terms of energy absorbed per unit of specimen width, and expressed in foot pounds per inch (Ft.Lbs./In.). Typically the final test result is calculated as the average of test results of five test bars.

Dynatup® (DYN TE): This test procedure is based on the ASTM D3763 method and was performed on a Dynatup brand impact test machine. This procedure provides information on how a material behaves under multiaxial deformation conditions. The deformation applied is a high speed puncture. An example of a supplier of this type of testing equipment is Dynatup. Reported as test results are the so-called total energy values at various temperatures, which are expressed in foot pounds (Ft.Lbs.). The final test result is calculated as the average of the test results of typically ten test plaques.

Melt viscosity (MV): This test procedure is based on the ASTM D1238 method. The equipment used is an extrusion plastometer equipped with an automatic timer. A typical example of this equipment would be the Tinius Olson MP 987. Before testing, the samples are dried for one hour at 150°C. The testing conditions are a melt temperature of 250°C, a total load of 5,000 gram, an orifice diameter of 0.0825 inch, and a dwell time of 5 minutes. The test result is expressed in the unit Poise.

Flexural Modulus (FM): This test procedure for measuring stiffness is based on the ASTM D790 method. Typical test bars have the following dimensions: 1/8 inch by 1/2 inch by 2-1/2 inch. The final test result is calculated as the average of test results of five test bars. The test involves a three point loading system utilizing center loading on a simply supported beam. Instron and Zwick are typical examples of manufacturers of instruments designed to perform this type of test. The flexural modulus is the ratio, within the elastic limit, of stress corresponding strain and is expressed in pounds per square inch (psi).

Gloss Retention (J1960 Gloss) - The J 1960 test is a SAE automotive specification for accelerated weathering, with gloss values measured using ASTM D523.

Color Retention (J1960 Color) - This test measures color change (ΔE) of the weathered sample using a Cielab System.

In the examples the following ingredients are as follows:
1) PCCD is a cycloaliphatic ester made by reacting equimolar amounts of dimethyl trans-1,4-cyclohexanedicarboxylate (t-DMCD) with 1,4-cyclohexanedimethanol (CHDM) in the presence of a titanium catalyst. The polymer has a melt viscosity of 4500-5000 poise (@250°C) resin with a Tₘ = 220°C.
2) Irganox® 1076 - Hindered Penolic Anti-Oxidant from Ciba-Geigy
3) Tinuvin®234 - UV absorber, substituted hydroxyphenyl benzotriazole from Ciba-Geigy Corporation
4) Lexan 100 grade - bisphenol A polycarbonate from GE Plastics.
5) PMMA V920A - Plexiglass poly (methyl methacrylate) from Ato Haas.
6) Lotadar AX8900 is a polyethylene, glycidyl methacrylate, methylacrylate polymer impact modifier.
7) Irgafos® 168 - an aryl phosphite stabilizer from Ciba Geigy Corporation.
8) Cyasorb® 5411 - a benzotriazole UV stabilizer from Cytec Corporation.
9) Acryloid® EXL 3330 - an acrylic rubber core shell impact modifier from Rohm & Haas.
10) ASA is an acrylonitrile-styrene graft n-butyl acrylate rubber (46% n-butyl acrylate).

The following Examples were prepared by blending all ingredients in a bucket blender until a good homogeneity of the blend was achieved. Formulations were extruded on a vacuum-vented 30 mm WP twin screw operated at 500°F (die head zone = 480°F). The screw speed was 250 rpm.

Table 1 and Table 2 illustrate the importance of the PMMA/PCCD ratio. Controls C1, C2, C4, and C5 represent the unblended polymers. Comparing these controls with E2 and E4, the 75/25 blends of PCCD and PMMA, it is clearly demonstrated that these blends show a positive synergy in terms of unnotched Izod values (UNI) as well as a full retention of the Dynatup Total Energy (Dyn TE). High PMMA to PCCD ratios between these two polymers do not yield any synergy (C3 and C6). Examples E1 and E3 of the invention containing a ratio of 1:1, also demonstrate unexpectedly high UNI ductility. An additional incorporation of 10% impact modifiers (Table 2, E5, E6) increases the notched Izod values (increased toughness) but does not change the primary synergy (Dyn TE, UNI) caused by the interaction of PCCD and PMMA. However, the increase in notched Izod values in combination with an increase in stiffness (FM) is also unexpected since stiffness and toughness are generally known to be inversely proportional to each other.

**TABLE 1**

| | EXAMPLES | | | | |
|---|---|---|---|---|---|
| | C1 | C2 | C3 | E1 | E2 |
| PMMA V920 | 99.75 | - | 74.81 | 49.88 | 24.94 |
| PCCD | - | 99.75 | 24.94 | 49.88 | 74.81 |
| Irganox 1076 | 0.20 | 0.20 | 0.20 | 0.20 | 0.20 |
| Phosphorous Acid | 0.05 | 0.05 | 0.05 | 0.05 | 0.05 |
| MV | 8103 | 4573 | 6787 | 6186 | 5362 |
| NI [ft. Ibs./in.] | 0.3 | 3.6 | 0.3 | 0.4 | 0.3 |
| UNI [ft. Ibs./in.] | 3.5 | 30.9 | 5.6 | 17.2 | 39.7 |
| Dyn TE [ft. lbs.] | 1.8 | 38.1 | 1.2 | 4.6 | 37.7 |
| FM [psi] | 453000 | 169200 | 373800 | 304800 | 309800 |
| FS [psi] | 15850 | 7056 | 13680 | 11220 | 11790 |

Additionally, Table 2 illustrates the gloss retention behavior of these formulations after weathering under J1960 conditions. The J1960 test is the current automotive specification for accelerated weather.

**TABLE 2**

| | EXAMPLES | | | | | | |
|---|---|---|---|---|---|---|---|
| | C4 | C5 | C6 | E3 | E4 | E5 | E6 |
| PMMA V920 | 99.75 | | 74.81 | 49.88 | 24.94 | 22.4 | 22.4 |
| PCCD | - | 99.75 | 24.94 | 49.88 | 74.81 | 67.1 | 67.1 |
| ASA IM | - | - | - | - | - | 10 | - |
| Acryloid EXL 3330 | - | - | - | - | - | - | 10 |
| Tinuvin 234 | 0.30 | 0.30 | 0.30 | 0.30 | 0.30 | 0.30 | 0.30 |
| Irganox 1076 | 0.20 | 0.20 | 0.20 | 0.20 | 0.20 | 0.20 | 0.20 |
| Phosphorous Acid | 0.05 | 0.05 | 0.05 | 0.05 | 0.05 | 0.05 | 0.05 |
| MV | 2525 | 2687 | 2692 | 3068 | 3644 | 3500 | 4400 |
| NI [ft. Ibs./in.] | 0.19 | 9.3 | 0.2 | 0.3 | 0.47 | 1.6 | 6 |
| UNI [ft. Ibs./in.] | 3.8 | 34.7 | 5.3 | 21.6 | 47.6 | 50 | 41 |
| Dyn TE [ft. lbs.] | 1.7 | 40.6 | 1.4 | 10.3 | 40 | 40 | 37 |
| FM [psi] | 438000 | 163000 | 365000 | 294000 | 222500 | 293000 | 343500 |

Gloss Retention (60°) after Accelerated Weathering Under J1960 Conditions Exposure [kJ/m²]

| | | | | | | | |
|---|---|---|---|---|---|---|---|
| 0 | 130 | 128 | 90 | 88 | 92 | 89 | 89 |
| 625 | 116 | 119 | 85 | 88 | 86 | 76 | 75 |
| 1250 | 109 | 112 | 83 | 87 | 88 | 78 | 79 |
| 1875 | 110 | 113 | 91 | 90 | 88 | 80 | 78 |

The 60 Gloss values of Table 2 were measured using ASTM D523.

Weathering was done under SAE J 1960 conditions using the following protocol;

Weathering: Un-textured Gardner chips were weathered in a Xenon Arc Atlas Ci65/DMC weatherometer using the SAE J1960 JUN89 method. A quartz inner and borosilicate glass outer filter was used. Samples were held in a two tier rack. Conditions were as follows:

| **CONTROL** | **DARK CYCLE** | **LIGHT CYCLE** |
|---|---|---|
| Irradiance | --- | 0.55±0.01 w/m2 at 340nm |
| Black panel temp | 38±2°C | 70±2°C |
| Wet bulb depression | 0°C | 12°C |
| Dry bulb | 38±2°C | 47±2°C |
| Relative humidity | 95±5% | 50±5% |
| Conditioning water | 40±4°C | 45±4°C |

A #180 cam was used providing 40 min. light followed by 20 min. of light and front water spray followed by 60 min. light, followed by 60 min. dark with water spray repeated. Total 120 min. light, 60 min. dark. Light time, 16 hrs. per day.

Samples were measured at 625, 1250, 1875 and 2500 KJ/m² total irradiance. Approximate days (with machine running 24 hours/day) would be 19.7, 39.5, 59.2 and 78.9 days, (3, 6, 12 and 17 weeks).

The next set of examples E7 to E12 in Table 3 illustrates that a change in ratio between PCCD and PMMA within the claimed ratio range changes the notched Izod values (for control examples outside the synergy range see Table 1). These examples also illustrate the influence of the impact modifier on the notch sensitivity and the Dynatup TE values as a function of the PMMA/PCCD ratio. However, an interesting observation is the finding that an increase of Ex1 3330 impact modifier loading from 10% to 15% (E9 -> E11 and E -> E12) increases the notched Izod values (NI) by 300 to 400 %, yet increases the melt viscosity only by 10% to 15%. This behavior is also not predictable.

**TABLE 3**

| | EXAMPLES | | | | | |
|---|---|---|---|---|---|---|
| | E7 | E8 | E9 | E10 | E11 | E12 |
| PMMA V920A | 22.1 | 25.3 | 29.5 | 35.4 | 27.8 | 33.4 |
| PCCD | 66.4 | 63.2 | 59.0 | 53.1 | 55.7 | 50.1 |
| Irganox 1076 | 0.2 | 0.2 | 0.2 | 0.2 | 0.2 | 0.2 |
| Acrylic EXL 3330 IM | 10.0 | 10.0 | 10.0 | 10.0 | 15.0 | 15.0 |
| Tetraphenylorthosillcate | 0.5 | 0.5 | 0.5 | 0.5 | 0.5 | 0.5 |
| Phosphorous Acid Tinuvin 234 | 0.3 | 0.3 | 0.3 | 0.3 | 0.3 | 0.3 |
| Carbon Black | 0.5 | 0.5 | 0.5 | 0.5 | 0.5 | 0.5 |
| MV [poise] | 9400 | 9100 | 9000 | 8770 | 10600 | 10500 |
| NI [ft. Ibs./in.] | 7.2 | 4.5 | 1.3 | 1.3 | 9.2 | 7.3 |
| UNI [ft. Ibs./in.] | 38.3 | 35.4 | 37.3 | 39.4 | 37.5 | 37.1 |
| Dyn TE [ft. lbs.] | 32 | 34 | 35 | 36 | 32 | 32 |
| FM [psi] | 248000 | 260000 | 275000 | 288900 | 256000 | 270000 |
| FS [psi] | 8500 | 8700 | 9100 | 9500 | 8400 | 8800 |

Table 4 illustrates the influence of two mineral fillers on the mechanical properties of an impact modified version of 75/25 PCCD/PMMA blend (E13). As demonstrated in E14 to E20, the ductility (NI, UNI, Dyn TE) decreases with increasing mineral filler content. However, low loading of these two fillers can still maintain a substantially high ductility in combination with an increase in stiffness (FM). Of particular interest is E15 which shows that a 10% loading of Ultratalc® 609 increases the stiffness and strength by 100% without sacrificing the viscosity (MV) of the blend.

**TABLE 4**

| | EXAMPLES | | | | | | | |
|---|---|---|---|---|---|---|---|---|
| | E13 | E14 | E15 | E16 | E17 | E18 | E19 | E20 |
| PMMA V920A | 22.3 | 21.1 | 19.8 | 18.6 | 21.1 | 19.8 | 18.6 | 17.3 |
| PCCD | 66.9 | 63.2 | 59.4 | 55.7 | 63.2 | 59.4 | 55.7 | 51.9 |
| Acrylic EXL3330+ | 10.0 | 10.0 | 10.0 | 10.0 | 10.0 | 10.0 | 10.0 | 10.0 |
| Silkem Silica | - | - | - | - | 5.0 | 10.0 | 15.0 | 20.0 |
| Ultratalc 609* | - | 5.0 | 10.0 | 15.0 | - | - | - | - |
| Mono Zinc Phosphate | 0.05 | 0.05 | 0.05 | 0.05 | 0.05 | 0.05 | 0.05 | 0.05 |
| Carbon Black | 0.3 | 0.3 | 0.3 | 0.3 | 0.3 | 0.3 | 0.3 | 0.3 |
| Irganox 1076 | 0.2 | 0.2 | 0.2 | 0.2 | 0.2 | 0.2 | 0.2 | 0.2 |
| Cynasorb 5411 | 0.5 | 0.5 | 0.5 | 0.5 | 0.5 | 0.5 | 0.5 | 0.5 |
| MV [poise] | 7320 | 7850 | 8400 | 9690 | 9300 | 10900 | 15100 | 18200.0 |
| NI [ft. Ibs./in.] | 2.3 | 0.6 | 0.45 | 0.45 | 1.1 | 0.95 | 0.65 | 0.2 |
| UNI [ft. Ibs./in.] | 38.4 | 30 | 16 | 12 | 38 | 39 | 35 | 34 |
| Dyn TE [ft. lbs.] | 37 | 15 | 5 | 3 | 29 | 23 | 21 | 9 |
| FM [psi] | 188000 | 226700 | 356700 | 383800 | 199400 | 207000 | 220000 | 244400 |
| FS [psi] | 7000 | 7800 | 14300 | 16000 | 7000 | 6900 | 7100 | 7200 |

| | | | | | | | | |
|---|---|---|---|---|---|---|---|---|
| + EXL3300 is 85% butyl acrylate rubber, 15% grafted PMMA shell. | | | | | | | | |
| * Barrets Mineral Co. | | | | | | | | |

**TABLE 5**

| | EXAMPLES | | | |
|---|---|---|---|---|
| | C7 | C8 | E21 | E22 |
| PMMA V920A | 96.5 | - | 21.6 | 21.6 |
| PCCD | - | 96.5 | 64.8 | 64.8 |
| Irganox 1076 | 0.2 | 0.2 | 0.2 | 0.2 |
| Ube ASA 1M | - | - | 1.0 | - |
| R&H EXL3330 IM | - | - | - | 10 |
| Phosphorous Add | 0.05 | 0.05 | 0.05 | 0.05 |
| Tinuvin 234 | 0.3 | 0.3 | 0.3 | 0.3 |
| TiO2 | 3 | 7100 | 3 | 3 |
| MV[poise] | 7100 | 4250 | 5350 | 6600 |
| NI [Ft.lbs./in.] | .16 | 18 | 2 | 2 |
| Unl[ft.lbs./in.] | 3/1 | 32.2 | 40 | 36 |
| DynTE [ft.lbs.] | .68 | 25 | 29 | 28 |
| FM[psi] | 45100 | 168000 | 220000 | 216000 |
| FS[psi] | 15800 | 6700 | 7800 | 7300 |

| Color Retention (ΔE) after Accelerated Weathering under J1960 Conditions | | | | |
|---|---|---|---|---|
| Exposure (kJ/m²] | 82 | 88 | 92 | 93 |
| 0 | 82 | 88 | 92 | 93 |
| 625 | 80 | 77 | 82 | 80 |
| 1250 | 78 | 81 | 78 | 73 |
| 1875 | 81 | 70 | 75 | 66 |
| 2500 | 80 | 21 | 67 | 56 |

Color changes shown in Table 5 were measured at Delta E using the CIELAB system. Reference; "principles of Color Technology" F.W. Billmeyer and M. Saltzman 2^{nd} Edition.

Table 5 illustrates examples based on TiO₂ filled PMMA/PCCD blends with and without impact modifiers. Additionally the color retention after J1960 weathering is presented. As it can be seen that all formulations exhibit almost no visible color formulation over the time period observed. Together with the data presented in Table 2, it can be demonstrated that this type of PCCD/PMMA formulation is very well suited for weatherable outdoor applications.

Table 6 illustrates examples based on PMMA/PCCD/PC blends.

**TABLE 6**

| | EXAMPLES | | | |
|---|---|---|---|---|
| | E23 | E24 | E25 | E26 |
| PMMA | 44.48 | 41.98 | 39.33 | 29.48 |
| PCCD | 44.48 | 41.98 | 39.33 | 29.48 |
| Mono Zinc Phosphate | 0.05 | 0.05 | 0.05 | 0.05 |
| Irgafos 168 | 0.5 | 0.5 | 0.5 | 0.5 |
| Cyasorb 5411 | 0.5 | 0.5 | 0.5 | 0.5 |
| Lotadar IM | 10 | 10 | 10 | 10 |
| Lexan PC | 0 | 5 | 10 | 29.48 |
| MV [poise] | 6500 | 7100 | 7700 | 10800 |
| NI [ft. Ibs./in.] | .3 | .6 | .4 | 1 |
| UNI [ft. Ibs./in.] | 28 | 34 | 29 | 40 |
| Dyn TE [ft.lbs.] | 29 | 28 | 30 | 35 |
| FM [psi] | 300000 | 300000 | 300000 | 307000 |
| FS [psi] | 11000 | 11000 | 11200 | 11700 |

Table 7 illustrates examples based on glass-filled PMMA/PCCD blends with different loading of glass fibers (GF).

**TABLE 7**

| | EXAMPLES | | | | | | | |
|---|---|---|---|---|---|---|---|---|
| | C7 | C8 | E27 | E28 | E29 | C9 | E30 | E31 |
| PMMA V920A | 74.2 | | 22.3 | 18.6 | 14.8 | 55.7 | 37.1 | 18.6 |
| PCCD | | 74.2 | 66.9 | 55.7 | 44.4 | 18.6 | 37.1 | 55.7 |
| R&H EXL 3330 | 10 | 10 | 10 | 10 | 10 | 10 | 10 | 10 |
| GF (grass fibers) | 15 | 15 | 0 | 15 | 30 | 15 | 15 | 15 |
| Irganox 1076 | 0.2 | 0.2 | 0.2 | 0.2 | 0.2 | 0.2 | 0.2 | 0.2 |
| Carbon Black | 0.4 | 0.4 | 0.4 | 0.4 | 0.4 | 0.4 | 0.4 | 0.4 |
| Irgafos 168 | 0.2 | 0.2 | 0.2 | 0.2 | 0.2 | 0.2 | 0.2 | 0.2 |
| NI (ft.lbs./in.] | .69 | 4.7 | .8 | 1.8 | 2.4 | 1.1 | 1.3 | 1.9 |
| UNI [ft.lbs./in.] | 3.9 | 14.9 | 38 | 12.2 | 11.5 | 7.7 | 10.1 | 12.6 |
| DynTE [ft.lbs.] | 4.3 | 15.7 | 33 | 11 | 12 | 4.2 | 3.8 | 11.2 |
| FM [psi] | 652300 | 369800 | 186000 | 395000 | 654000 | 600000 | 515500 | 393400 |
| FS [psi] | 16500 | 12200 | 7000 | 11800 | 16000 | 17780 | 15510 | 11740 |

The foregoing comparative tests clearly establish the new and unexpected improvements in ductility and stiffness obtained through the use of binder materials for thermoplastic molding compositions comprising polymer blends of cycloaliphatic polyester polymers and acrylic polyester polymers in a weight ratio of about 1:1 up to about 95:5, more preferably from about 60 to 80 parts by weight of the cycloaliphatic polymer and about 40 to 20 parts by weight of the acrylic polymer.

It should be understood that the foregoing description is only illustrative of the invention. Various alternative modifications can be employed by those skilled in the art without departing from the scope of the invention. Accordingly, the present invention is intended to embrace all such alternative, modifications and variances which fall within the scope of the appended claims.

## Claims

1. A molding composition comprising a major amount by weight of a resinous binder material comprising a blend of thermoplastic resins containing from about 50-95% by weight of a cycloaliphatic polyester resin which consists essentially of the condensation product of an aliphatic dicarboxylic acid or chemical equivalent and an aliphatic diol or chemical equivalent, said cycloaliphatic polyester resin containing at least about 80 % by weight of a cycloaliphatic dicarboxylic acid, or chemical equivalent, and/or of a cycloaliphatic diol or chemical equivalent, and from about 50% - 5% by weight of an acrylic homopolymer structure: 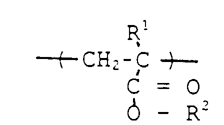 in which R¹ is selected from the group consisting of H and C1-C6 alkyl, and R² is selected from the group consisting of C1-C12 alkyl, cycloalkyl and alkyl aryl, containing between about 100 and 100,000 repeating units, or a copolymer thereof with up to about 50% by weight of at least one other ethylenically - unsaturated monomer, said binder material blend providing a molding composition having a substantially greater ductility and toughness then expected from the corresponding properties of the individual polyester and acrylic resins as predicted by the rule of mixtures.

2. A molding composition according to claim 1 in which the cycloaliphatic polyester resin consists essentially of the condensation product of a cyclohexyl dicarboxylic acid and a cyclohexyl dialkanol.

3. A molding composition according to claim 2 in which said cyclohexyl dicarboxylic acid comprises 1,4-cyclohexyl dicarboxylic acid and said cyclohexyl dialkanol comprises 1,4-cyclohexyl dimethanol.

4. A molding composition according to claim 1 in which said ethylenically-unsaturated monomer is selected from the group consisting of styrene, alkyl styrene, acrylonitrile, alpha olefins, vinyl esters, unsaturated diacids or anhydrides, and unsaturated amides.

5. A molding composition according to claim 1 in which the acrylic homopolymer is a poly(methyl acrylate) or a poly(methyl methacrylate) having a glass transition temperature above about 80°C.

6. A molding composition according to claim 1 further containing from about 2-30% by weight of the total composition of an impact modifier.

7. A molding composition according to claim 6 in which the impact modifier has a glass transition temperature of 0°c or less.

8. A molding composition according to claim 6 in which said impact modifier is a rubber selected from the group consisting of acrylic rubbers, acrylonitrile-styrene-acrylate (ASA) rubbers, ethylene-propylene-diene graft styrene acrylonitrile (EPDM-g-SAN) rubbers and glycidyl ester polymers.

9. A molding composition according to claim 8 in which said impact modifier comprises 1 to 10% of a glycidyl ester terpolymer with ethylene and alkyl acrylate.

10. A molding composition according to claim 1 further containing from about 5-40% by weight of the total composition of a filler.

11. A molding composition according to claim 10 in which the filler comprises glass fibers, talc or silica.
